# Europäisches Patentamt
# European Patent Office
# Office européen des brevets

(19)

(11) Veröffentlichungsnummer: **0 048 790**
**B1**

(12) **EUROPÄISCHE PATENTSCHRIFT**

(45) Veröffentlichungstag der Patentschrift:
12.09.84

(51) Int. Cl.³: **F 03 D 3/04**

(21) Anmeldenummer: **81103757.1**

(22) Anmeldetag: **15.05.81**

(54) **Vorrichtung zur Erzeugung von elektrischer Energie durch Ausnutzung und Steuerung der Windenergie.**

(30) Priorität: **25.09.80 ES 495343**

(43) Veröffentlichungstag der Anmeldung:
**07.04.82 Patentblatt 82/14**

(45) Bekanntmachung des Hinweises auf die Patenterteilung:
**12.09.84 Patentblatt 84/37**

(84) Benannte Vertragsstaaten:
**AT BE CH DE FR GB IT LI LU NL SE**

(56) Entgegenhaltungen:
**DE - C - 867 380**
**DE - C - 922 544**
**FR - A - 515 331**
**GB - A - 667 587**

(73) Patentinhaber: **Martinez Parra, José, Calle Salitre 33-1 Edificio Juan XXIII, Cartagena (Murcia) (ES)**

(72) Erfinder: **Martinez Parra, José, Calle Salitre 33-1 Edificio Juan XXIII, Cartagena (Murcia) (ES)**

(74) Vertreter: **Vossius Vossius Tauchner Heunemann Rauh, Siebertstrasse 4 P.O. Box 86 07 67, D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Gegenstand der Erfindung ist eine Vorrichtung zur Erzeugung von elektrischer Energie durch Ausnutzung und Steuerung der Windenergie.

Die Gewinnung von elektrischer Energie durch Umwandlung der Drehbewegung eines Rotors oder Flügelrades mittels eines Generators ist an sich bekannt (siehe DE-C-867 380). Wenn die Bewegungsenergie, die zum Betrieb des Generators benützt werden soll, vom Wind stammen soll, ergeben sich jedoch eine Reihe von Schwierigkeiten, die eine technische Nutzung der Energiequelle Wind bis heute in praktischem Masse noch nicht ermöglichten. Zu diesen Schwierigkeiten gehören insbesondere die häufig ungleichmässige und ungenügende Stärke des Windes und seine ebenfalls häufig wechselnde Richtung.

Der Erfindung liegt die Aufgabe zugrunde, eine Vorrichtung zur Erzeugung von elektrischer Energie durch Ausnutzung und Steuerung der Windenergie bereitzustellen, mit der auch bei Windstärken, die an sich eine wirtschaftliche Gewinnung elektrischer Energie nicht erlauben, eine befriedigende Ausnutzung der Windenergie erreicht wird, und zwar unabhängig von der Richtung, aus der der Wind kommt. Diese Aufgabe wird durch die Erfindung gelöst.

Gegenstand der Erfindung ist demnach eine Vorrichtung zur Erzeugung von elektrischer Energie durch Ausnutzung und Steuerung der Windenergie gemäss den Patentansprüchen.

Die Vorrichtung der Erfindung ermöglicht die Erzeugung von elektrischer Energie durch Ausnutzung und Steuerung der Windenergie auch bei Windstärken, die üblicherweise zur wirtschaftlichen Gewinnung von elektrischer Energie nicht ausreichen. Dies wird durch den grossdimensionierten Überbau erreicht, durch den eine Regulierung und Konzentration des Windes in Richtung auf das ebenfalls verhältnismässig grossdimensionierte Flügelrad erreicht wird. Der Wind gelangt in der Vorrichtung der Erfindung also mit einer im Vergleich zur Umgebung erheblich erhöhten Geschwindigkeit und Intensität auf das Flügelrad. Durch die an den Eingängen zum Raum des Flügelrades vorgesehenen Tore kann der Zutritt des Windes je nach Bedarf gesteuert werden. Ein besonders wesentliches Merkmal der Erfindung besteht schliesslich darin, dass der Wind durch die Konstruktion des Überbaus, insbesondere die Krümmung der Seitenwände der Träger in Richtung auf die konkaven Flächen der Flügel des Flügelrades geleitet und konzentriert wird. Schliesslich ist auch das Flügelrad selbst durch seine Konstruktion ein wesentliches Merkmal der Erfindung, da es zur Verbindung der Flügel untereinander und mit der Achse grossdimensionierte horizontale Platten aufweist, die gleichzeitig als Schwungräder wirken. Sie verleihen dem Flügelrad eine erhebliche Trägheit und sorgen damit für eine von kurzfristigen Änderungen der Windgeschwindigkeit und -intensität verhältnismässig unabhängige Drehzahl des Flügelrades.

Die Vorrichtung der Erfindung zur Erzeugung von elektrischer Energie durch Ausnutzung und Steuerung der Windenergie wird vorzugsweise an Orten aufgestellt, die geographisch für das Vorherrschen von verhältnismässig starken Winden bekannt sind.

Die Einrichtungen, die den Gesamtaufbau der Vorrichtung der Erfindung darstellen, werden in und auf einem festen Bauwerk errichtet, das vorzugsweise aus mit Stahl bewehrtem Beton besteht und das in zwei Hauptebenen unterteilt ist. Die erste Ebene hat eine kreisförmige Oberfläche und ihr Aufriss bildet eine grosse Kuppel. Die zweite Ebene hat ebenfalls eine kreisförmige Oberfläche und überlagert und umgibt die vorher genannte. Sie wird durch die Träger des Überbaues in mehrere, vorzugsweise vier Sektoren unterteilt, die nach aussen in ihrer ganzen umlaufenden Oberfläche offen sind.

Die Träger des Überbaus, die diesen in Sektoren unterteilen, sind in ihrem äusseren Teil vollständig geschlossene Mauern mit geraden vertikalen Wänden. In dem Masse, wie die Mauern radial in Richtung auf das Zentrum des Aufbaues zusammenlaufen, teilen sie sich in zwei Mauern auf, wobei jede dieser beiden Mauern eine unterschiedlich gekrümmte Form aufweist. Beide Mauern vereinigen sich zu einer umlaufenden Mauer einer zylindrischen, grossdimensionierten Kammer, die sich über dem Zentrum der Kuppel der Hauptebene und unter der Bedeckung der oberen Ebene befindet. Die Krümmungen dieser Mauern verursachen die Ablenkung und Konzentration des Windes, der von aussen eindringt, in Richtung auf den Eingang der zylindrischen Kammer. Die weite Trennung, die zwischen diesen Mauern erreicht wird, ergibt die für den gesamten Aufbau notwendige Stabilität.

Die umlaufende Mauer der zylindrischen Kammer, auf die vorstehend Bezug genommen wurde, weist vier Öffnungen auf, eine in jedem Sektor, die sich zwischen dem Oberteil der Kuppel der unteren Ebene und der Bedeckung der oberen Ebene befinden und mit den Linien der Trennmauern der entsprechenden Sektoren zusammenfallen. Mit dieser Anordnung ergibt sich eine Konzentration der aufgenommenen Kräfte des Windes, die an der Öffnung irgendeines der entsprechenden Sektoren erhalten werden.

Zur Steuerung und Regulierung des Eintritts und Ausganges des Windes, der durch die zylindrische Kammer gehen muss, und zwar unabhängig davon, aus welcher Richtung er kommt, sind Tore vorgesehen, wobei sich jeweils eines in jedem Sektor befindet. In der bevorzugten Ausführungsform mit vier Sektoren enthält die Vorrichtung der Erfindung demnach auch vier Tore. Das Öffnen und Schliessen der Tore wird je nach Notwendigkeit mit mechanischen oder hydraulischen Mitteln bewirkt. Diese Tore bewegen sich auf Führungsschienen, die zu diesem Zweck sowohl an ihrem unteren als auch an ihrem oberen Teil angebracht sind.

Nach ihrer Bewegung bleiben die Tore beim Schliessen zwischen den Trennmauern des Sektors eingelassen. Beim Öffnen verschwinden sie in einem Hohlraum, der zwischen den Trennmauern des entsprechenden Sektors vorgesehen ist. Wenn der Wind beispielsweise von Norden kommt und durch die Öffnung des in dieser Richtung orientierten Sektors eintritt, wird der Zutritt des Windes mit dem Tor dieses Sektors je nach seiner Geschwindigkeit oder Stärke reguliert. Die Tore der nach Osten und nach Westen orientierten Sektoren bleiben geschlossen und die des südlichen Sektors bleibt in dem erforderlichen Ausmass offen, um eine weitgehend konstante Umdrehungszahl des in dem erwähnten Raum angebrachten Flügelrades zu erreichen. Dies ist die wesentliche Basis der Gewinnung von Bewegungsenergie für den Betrieb der Vorrichtung der Erfindung zur Erzeugung von elektrischer Energie.

In dem Raum im Zentrum der Vorrichtung der Erfindung befindet sich ein grosses Flügelrad aus zerlegbaren Teilen. Die Flügel des Rades sind in horizontaler Richtung gekrümmt. Sie sind mit einer zentralen Achse verbunden und durch grosse Platten, vorzugsweise aus Stahl, in horizontaler Richtung versteift. Diese plattenförmigen Versteifungen wirken gleichzeitig als Schwungräder für das Flügelrad.

Das Flügelrad befindet sich in dem Raum, welcher über dem Mittelteil der Kuppel gelegen ist. Er ist verbunden mit der Abdeckung der oberen Ebene und bildet einen Teil des Gesamtaufbaues. Das erwähnte Flügelrad wird von mehreren Gleitlagern oder Schienen aus Stahl unterstützt, die auf dem Betonaufbau verankert sind. Dies erfolgt derart, dass die Reibung auf den Schienen so gering wie möglich ist.

Die Geschwindigkeit der Drehung des Flügelrades wird über eine zentrale, vertikale Achse, die über ihre ganze Länge in mehreren Lagern gehalten wird, auf ein zentrales Getriebe übertragen. Dieses Getriebe befindet sich ebenso wie die übrige Maschinenausrüstung zur Erzeugung elektrischer Energie auf dem Boden der Hauptebene innerhalb der Kuppel. Aus diesem Grund durchstösst die vertikale Achse des Flügelrades diese Kuppel an ihrem höchsten Punkt.

Das Getriebe, das die Bewegung des Flügelrades über seine zentrale Achse aufnimmt, überträgt diese seinerseits auf eine oder zwei Einrichtungen zur automatischen Steuerung der Drehzahl des Flügelrades und/oder der nachgeschalteten Generatoren zur Erzeugung von elektrischer Energie, um optimale Betriebsbedingungen im Hinblick auf die gegebene Stärke des Windes zu erzielen. Falls diese Generatoren Gleichstromgeneratoren sind, können ihnen elektro-mechanisch oder elektronisch arbeitende Wechselstromerzeuger, wie Gleichstrom-Wechseltrom-Wandler (Gleichstrommotor mit nachgeschaltetem Wechselstromgenerator) oder Wechselrichter, nachgeschaltet werden. Vorzugsweise soll die Drehzahl der Genratoren zur Erzeugung der elektrischen Energie konstant sein und einen vorgegebenen Wert annehmen. Die Generatoren zur Erzeugung der elektrischen Energie, die gleichzeitig oder abwechselnd betrieben werden können, übertragen die von ihnen erzeugte Energie auf eine ausserhalb der Vorrichtung befindliche Transformatoranlage.

Von besonderer Bedeutung innerhalb der Vorrichtung der Erfindung ist demnach die Konstruktion des Überbaus und des Flügelrades mit den folgenden Hauptelementen:

a) Das Fundament und die Oberseite des kuppelförmigen Gebäudes, die von aussen in Richtung auf das Zentrum der Vorrichtung ansteigt;

b) Die Dachkonstruktion, deren Unterseite von aussen in Richtung auf das Zentrum der Anlage nach unten verläuft;

c) Die Träger, die zwischen dem Fundament bzw. dem kuppelförmigen Gebäude und der Dachkonstruktion senkrecht zu diesen angeordnet und mit ihnen verbunden sind und die radial von aussen in Richtung auf das Zentrum der Anlage hin verlaufen;

d) Das Flügelrad mit vertikaler Achse und in horizontaler Richtung gekrümmten Flügeln oder Schaufeln, das im Zentrum der Vorrichtung zwischen dem kuppelförmigen Gebäude und der Dachkonstruktion angeordnet ist in einem Raum, der teilweise von den Wänden der Träger begrenzt wird;

e) Die unterschiedliche Krümmung der Seitenwände der Träger, die für die Regulierung und Konzentrierung des Windes in Richtung auf die konkaven Oberflächen der Flügel des Flügelrades sorgen;

f) Die Tore, die an den Eingängen zu dem Raum vorgesehen sind, in dem sich das Flügelrad befindet, und die durch ihre Öffnung bzw. Schliessung die Steuerung des Zutritts des Windes zum Flügelrad ermöglichen, wobei sie beim Öffnen in Schlitzen verschwinden, die in den Trägern vorgesehen sind.

Die vorstehend erläuterte Bauweise des Überbaus der erfindungsgemässen Vorrichtung ermöglicht infolge der weiten Öffnungen der Sektoren an ihrer Aussenseite die Aufnahme einer grossen Menge Windes, dessen Bewegung bzw. Strömung durch die rasche Abnahme des Querschnittes seines Strömungsweges stark beschleunigt wird. Damit wird auch bei einem Wind, der in der Umgebung der Anlage als verhältnismässig schwach erscheint, die Nutzbarmachung einer grossen Menge an Bewegungsenergie und ihre Umwandlung in elektrische Energie in wirtschaftlicher Weise ermöglicht.

Das Flügelrad im Zentrum der Vorrichtung der Erfindung besteht aus zerlegbaren Elementen. Seine Flügel oder Schaufeln sind in horizontaler Richtung gekrümmt. Ihre Anzahl ist nicht besonders begrenzt. Bevorzugt sind jedoch Flügelräder mit einer grösseren Zahl von Flügeln, beispielsweise mindestens 10. Besonders bevorzugt ist eine Ausführungsform mit 12 Flügeln. Die Flügel sind mit ihrer zentralen Achse verbunden und durch Platten aus Stahl horizontal versteift, welche zugleich die Funktion von Schwungrädern haben und dem Flügelrad eine höhere Trägheit verleihen. Auch die Anzahl dieser versteiften Platten ist nicht besonders begrenzt. Eine Ausführungsform der Erfindung weist beispielsweise fünf derartige Platten auf. An ihrer Unterkante werden die Flügel auf Lagerstreifen gehalten, die der Führung des Flügelrades bei seiner Drehung dienen. Sie sind mit dem Aufbau derart verbunden, dass die Reibung des Flügelrades auf diesen Schienen so gering wie möglich ist, während gleichzeitig grosse Sicherheit in Führung und Stabilität erreicht wird.

Zur Übertragung der Bewegungsenergie des Flügelrades dient seine zentrale Achse. Diese ist an ihrem oberen Ende in einem Lager abgestützt, das sich in der Dachkonstruktion befindet. Unter dem Flügelrad durchstösst die Achse das kuppelförmige Gebäude. Auch in diesem Bereich sind Lager für das reibungsvermindernde Drehen der Achse vorgesehen. Die Achse endet in dem zentralen Getriebe des Maschinenparks der Vorrichtung.

Die Vorrichtung der Erfindung wird nun anhand der in der Zeichnung dargestellten Ausführungsform näher erläutert.

Es zeigen:

Fig. 1 einen vertikeln Querschnitt,

Fig. 2 eine Seitenansicht,

Fig. 3 einen horizontalen Querschnitt durch die Vorrichtung in Höhe der Linie A-A in Fig. 1,

Fig. 4 einen horizontalen Querschnitt durch die Vorrichtung in Höhe der Linie B-B von Fig. 1 und

Fig. 5 eine Aufsicht auf die Vorrichtung der Erfindung.

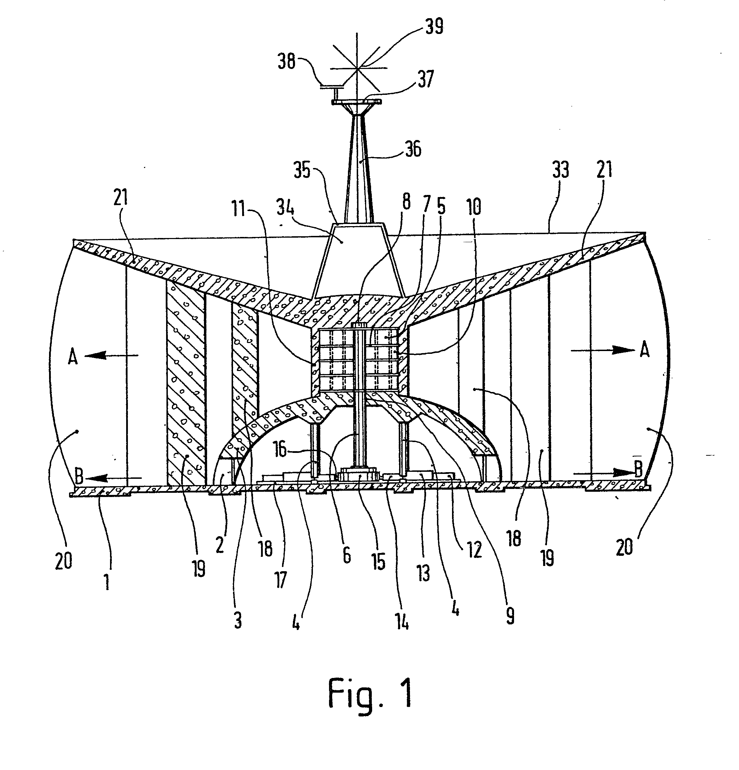

Fig. 1 zeigt einen vertikalen Querschnitt durch die Mitte der Vorrichtung der Erfindung. Mit 1 wird das Stahlbetonfundament der Vorrichtung bezeichnet, auf dem sämtliche Teile ruhen. Den inneren Bereich der Vorrichtung bildet ein kuppelförmiges Gebäude 3 aus Stahlbeton, dessen Zugänge mit 2 bezeichnet sind. Im Inneren des kuppelförmigen Gebäudes 3 befindet sich der Maschinenpark, der nachstehend erläutert wird. Das kuppelförmige Gebäude 3 wird von einer Mehrzahl von Pfeilern 4 gestützt, die auch der Unterstützung des inneren Teils des nachstehend erläuterten Überbaus dienen.

Über dem Mittelteil des kuppelförmigen Gebäudes 3 befindet sich das Flügelrad 5 mit seiner zentralen Achse 6, die das kuppelförmige Gebäude 3 im zentralen Punkt durchstösst. Das Flügelrad 5 weist eine Mehrzahl von Flügeln oder Schaufeln auf, die in horizontaler Richtung gekrümmt sind. Die Flügel bestehen aus Metall, beispielsweise Aluminium oder Stahl. Die Zahl der Flügel des Flügelrades ist nicht besonders begrenzt. Um eine gleichmässige Drehbewegung und gute Ausnutzung des Windes zu erreichen, ist jedoch eine grössere Anzahl von Flügeln, beispielsweise 12, bevorzugt. Die Flügel des Flügelrades sind mit Hilfe von mehreren horizontal angeordneten runden Platten miteinander und mit der zentralen Achse verbunden und versteift. Die Platten 7 bestehen vorzugsweise aus Stahl. Sie bewirken neben der Verstärkung und Versteifung des Flügelrades auch eine Erhöhung seiner Trägheit, dass sie als Schwungräder wirken. Damit wird auch bei kurzfristigen Änderungen der Windgeschwindigkeit und -intensität eine verhältnismässig gleichmässige Drehbewegung des Flügelrades sichergestellt. Die Zahl der eingesetzten Platten 7 ist ebenfalls nicht besonders begrenzt. Sie richtet sich nach der Grösse des Flügelrades. Bevorzugt ist beispielsweise eine Ausführungsform mit fünf horizontalen Platten 7.

Die vertikale Achse 6 des Flügelrades 5 ist an ihrem oberen Ende mit dem Lager 8 in der Abdeckung des Überbaus gelagert. An ihrem Durchtritt durch das kuppelförmige Gebäude 3 sind Lager 9 vorgesehen, deren Zweck wie der des Lagers 8 darin besteht, einen möglichst reibungsarmen Lauf der Achse zu erreichen.

Die Achse 6 überträgt die Bewegung des Flügelrades 5 auf das Getriebe 15, das den zentralen Teil des im inneren des kuppelförmigen Gebäudes 3 angeordneten Maschinenparks zur Erzeugung der elektrischen Energie darstellt. Vom Getriebe 15 geht eine horizontale Achse 16 aus, über die die Bewegung vom Getriebe 15 auf die Einrichtungen 14 zu automatischen Steuerung der Drehzahl und dort auf die Generatoren 13 zur Erzeugung der elektrischen Energie übertragen wird. 12 bezeichnet Wechselstromerzeuger, die an die Generatoren angeschlossen sind. Der gesamte Maschinenteil ruht auf einer isolierten Plattform 17, die insbesondere der Absorption von Schwingungen dient.

Der Überbau, der neben dem kuppelförmigen Gebäude und dem Flügelrad 5 mit seiner Achse 6 den dritten wesentlichen Teil der Vorrichtung der Erfindung darstellt, besteht im wesentlichen aus Säulen, 18, 19 und 20 sowie aus Trägern 22 und der Dachkonstruktion 21. Diese Teile sind vorzugsweise aus Stahlbeton aufgebaut. Sie ruhen sämtlich auf dem Fundament 1. Die inneren Säulen 18, Zwischensäulen 19 und äusseren Säulen 20 dienen der Unterstützung der Dachkonstruktion 21 und damit der Stabilität des gesamten Überbaus. Die Dachkonstruktion 21 besteht aus Stahlbetonrippen, die zum Zentrum des Überbaus hin trichterförmig nach unten verlaufen. Ihre obere Begrenzung wird mit 33 bezeichnet.

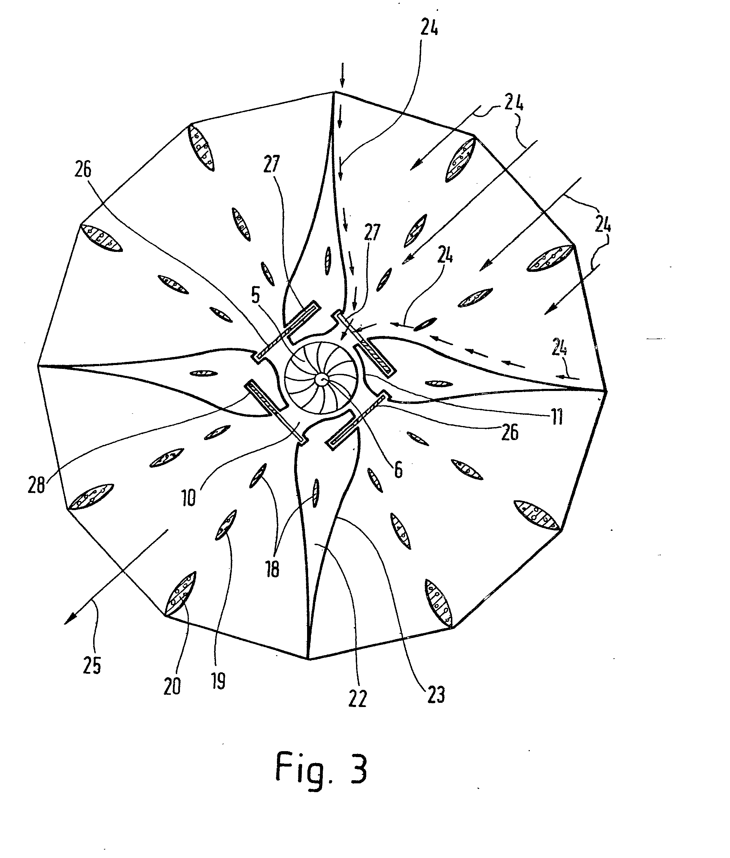

Eine besondere Bedeutung innerhalb des Überbaus kommt den Trägern 22 zu. Auch sie ruhen auf dem Fundament 1 und reichen in vertikaler Richtung bis zur Dachkonstruktion 21. Vorzugsweise sind vier dieser Träger 22 vorgesehen, die die Vorrichtung der Erfindung in vier Sektoren unterteilen; vgl. Fig. 3. Die Träger 22 stellen am äusseren Umfang der Vorrichtung eine einzelne Mauer dar, die sich radial in Richtung auf das Zentrum der Vorrichtung hin aufteilt und als zwei Mauern mit verschieden geschwungener Form in Richtung auf den Raum hin verläuft, in dem sich das Flügelrad 5 befindet. Vor diesem Raum 10 vereinigen sich die beiden Mauern wieder und bilden dabei die Abschnitte 11 der Begrenzung des Raumes 10 des Flügelrades 5. Im Querschnitt weisen die Träger 22 demnach etwa Tropfenform auf. Die Seitenwände 23 der Träger 22 sind in vertikaler Richtung gerade, dagegen in horizontaler Richtung gekrümmt. Diese Krümmung ist auf den beiden Seiten eines Trägers 22 unterschiedlich. Sie ist so gestaltet, dass der Wind in besonders günstiger Weise in Richtung auf die konkaven Flächen der Flügel des Flügelrades 5 geleitet wird.

Die Träger 22 sind in ihrem Inneren, abgesehen von nötigen Versteifungen für ihre Stabilität, hohl. Diese Hohlräume in den Trägern 22 dienen unter anderem der Aufnahme der Tore 26, die zur Steuerung des Eintritts und Ausgang des Windes in bzw. aus dem Raum, in dem sich das Flügelrad 5 befindet, vorgesehen sind. Die Träger 22, die aus Stahlbeton bestehen, stellen also aufgrund ihrer äusseren Gestalt, die der Konzentration des Windes in Richtung auf die Flügel des Flügelrades 5 dient, und wegen ihrer Funktion für die Aufnahme der Tore einen wesentlichen Bestandteil der Vorrichtung der Erfindung dar. Daneben dienen sie auch der Erhöhung der Festigkeit des Überbaus.

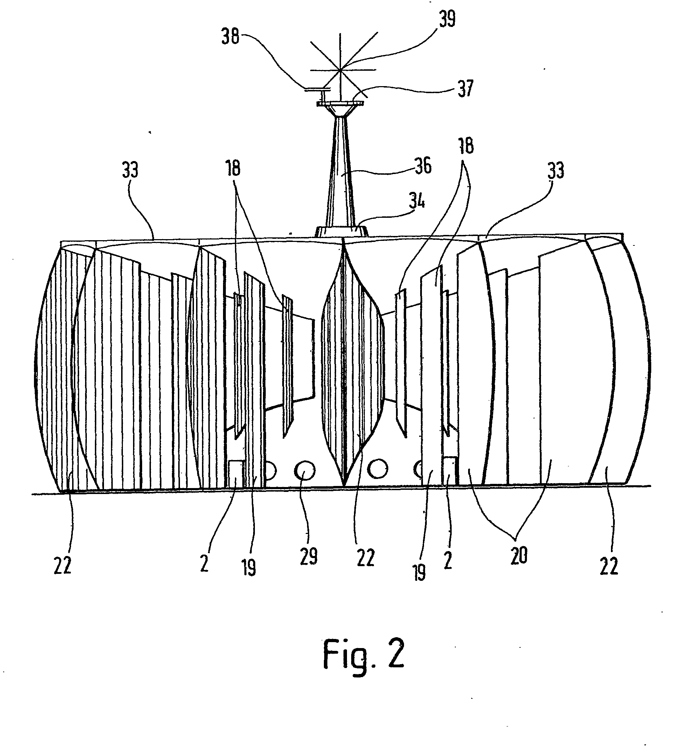

Fig. 2 ist eine Seitenansicht der Vorrichtung der Erfindung. Auf dieser Figur ist im mittleren unteren Bereich das kuppelförmige Gebäude 3 mit seinen Eingängen 2 und den Licht- und Lüftungsöffnungen 29 zu erkennen. Über der Kuppel und um sie herum befindet sich der Überbau mit den inneren Säulen 18, den Zwischensäulen 19 und den äusseren Säulen 20. Zu erkennen sind ferner drei Träger 22, wobei an dem mittleren die unterschiedliche Krümmung der Seitenwände zu sehen ist.

Fig. 3 ist ein horizontaler Querschnitt durch die Vorrichtung der Erfindung in Höhe des Flügelrades 5, d.h. über dem kuppelförmigen Geäude 3. Auch in dieser Figur sind die inneren, zwischenliegenden und äusseren Säulen 18, 19 und 20 sowie die Träger 22 zu erkennen. In Fig. 3 ist auch ein möglicher Strömungsweg des Windes dargestellt. Der Wind dringt aus einer beliebigen Richtung in einen (oder zwei) der dort gezeichneten vier Sektoren des Überbaus ein, die durch jeweils zwei Träger 22 gebildet werden. In Fig. 3 ist die Windrichtung durch die Pfeile 24 dargestellt. Der Wind wird durch den Verlauf der vertikalen Wände 23 der Träger 22 in horizontaler Richtung konzentriert und kanalisiert, ebenso wie in vertikaler Richtung durch das ansteigende Profil des kuppelförmigen Gebäudes 3 und die trichterförmig nach unten verlaufende Dachkonstruktion 21.

In dem Bereich, in dem sich die vertikalen Wände 23 zweier benachbarter Träger 22 besonders nahe kommen, d. h. vor dem Raum 10, in dem sich das Flügelrad 5 befindet, sind Tore 26 vorgesehen, mit denen der Eintritt und Austritt des Windes in bzw. aus dem Raum 10, in dem sich das Flügelrad 5 befindet, gesteuert werden kann. Die Tore 26 sind vorzugsweise als Schiebetore ausgebildet, die sich auf Schienen 27 bewegen. Wenn die Tore 26 für den Eintritt des Windes geöffnet werden, verschwinden sie in Schlitzen 28, die innerhalb des Hohlraumes der Träger 22 vorgesehen sind. Mit 25 ist in Fig. 3 die Richtung des aus der Vorrichtung der Erfindung austretenden Windes dargestellt.

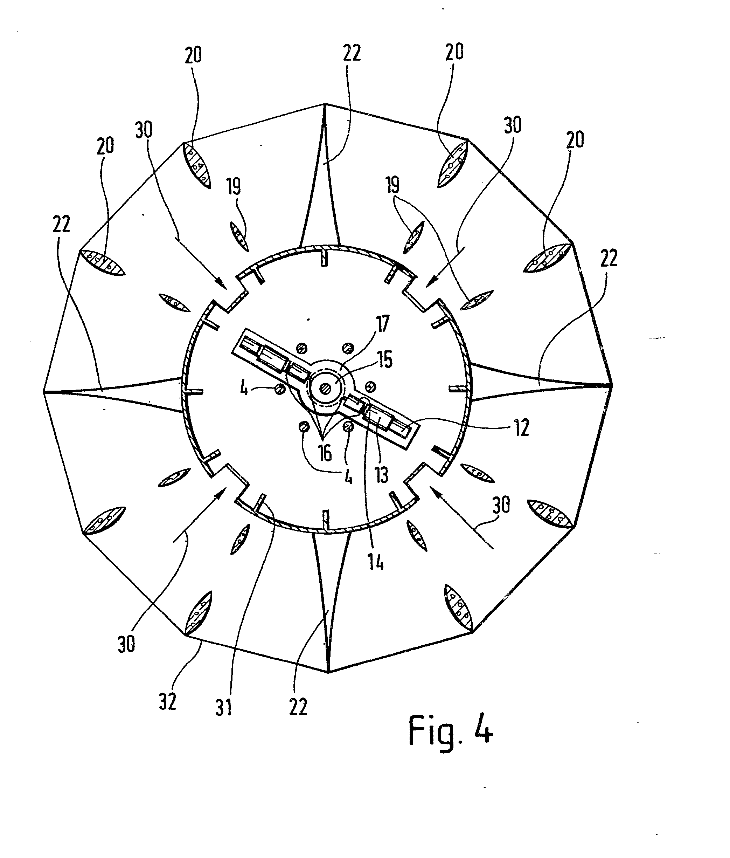

Fig. 4 ist ein horizontaler Querschnitt durch die Vorrichtung der Erfindung in Höhe des Bodens.

Der innere Bereich der Fig. 4 zeigt den Umfang des kuppelförmigen Gebäudes 3 mit den Zugängen 30. Die Kuppel selbst wird durch Stahlbetonrippen 31 verstärkt. Im Querschnitt erkennbar sind ebenfalls die Pfeiler 4, die das Gewicht des kuppelförmigen Gebäudes 3 und des zentralen Bereiches des Überbaus tragen. Im Zentrum befindet sich die Maschinenanlage mit ihren durch 12 bis 17 bezeichneten Bestandteilen. 32 bezeichnet in Fig. 4 die Linie der äusseren Umrandung der Vorrichtung der Erfindung.

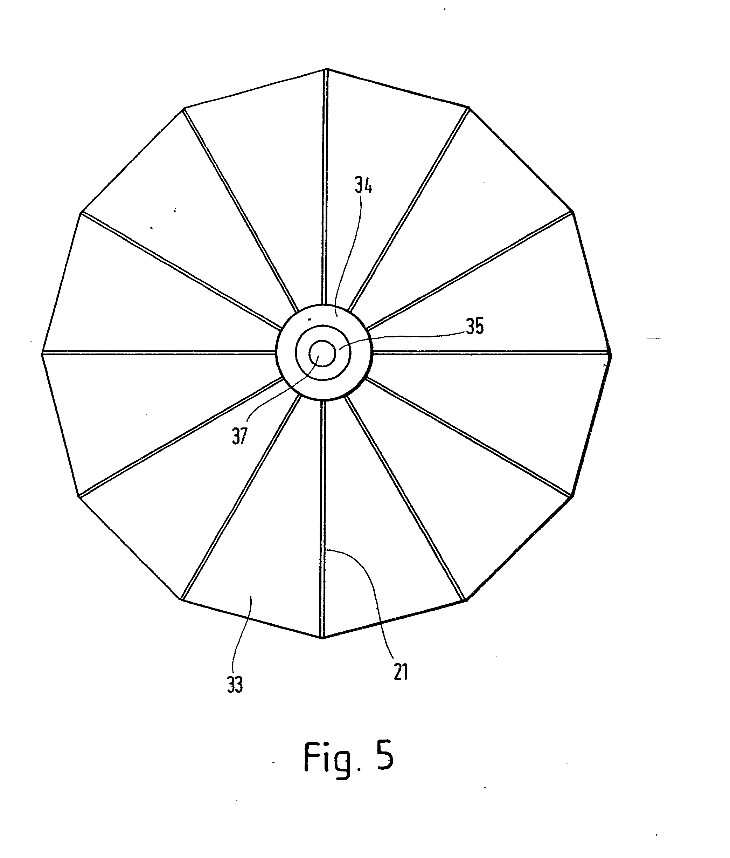

Fig. 5 ist eine Aufsicht auf die Vorrichtung der Erfindung. In dieser Figur sind die Rippen der Dachkonstruktion 21 zu erkennen. Wie in den Fig. 1 und 2 bezeichnet 33 die horizontale Abdeckung des Überbaus als Stahlbeton. Im Zentrum dieser oberen Abdeckung 33 befindet sich ein Raum 34, der der Wetterbeobachtung und Nachrichtenübermittlung dient. Dieser Raum ist durch die Abdeckung 35 verschlossen. Der Raum 34 wird von einer Säule 36 überragt, die eine Plattform 37 für Mess-, Nachrichten- und Anzeigeinstrumente trägt. 38 stellt ein Gerät zur Messung der Windgeschwindigkeit und 39 eine Antenne für Nachrichtenübermittlung dar.

Das Beispiel erläutert die Erfindung.——

Beispiel

In einer konkreten Ausführungsform besteht die Vorrichtung der Erfindung aus einem kuppelförmigen Gebäude mit einem inneren Durchmesser am Boden von 90 m und einer grössten inneren Höhe von 27 m. Über dem Mittelteil des kuppelförmigen Gebäudes befindet sich ein Flügelrad aus zerlegbaren Teilen mit einem Durchmesser von 26 m und einer Höhe von 22 m, das aus 12 Flügeln besteht.

Der Überbau hat einen Durchmesser von etwa 200 m. Er wird durch vier Träger in vier Sektoren eingeteilt. Die für das Eindringen offene Oberfläche eines Sektors der Vorrichtung ist 142 m breit und 84 m hoch, hat also eine Oberfläche von 11 928 m².

Die Öffnung am Eingang zu dem Raum, in dem sich das Flügelrad befindet, ist 8 m breit und 22 m hoch. Ihre Oberfläche beträgt also 198 m². Dies bedeutet, dass mit dieser Vorrichtung eine etwa 60fache Konzentrierung des Windes in Richtung auf die Flügel des Flügelrades erreicht wird.

**Patentansprüche**

1. Vorrichtung zur Erzeugung von elektrischer Energie durch Ausnutzung und Steuerung der Windenergie, bestehend aus einem kuppelförmigen Gebäude (3), auf dem sich ein Flügelrad (5) befindet, dessen Achse (6) das kugelförmige Gebäude (3) an seiner höchsten Stelle durchstösst und die Bewegung des Flügelrades (5) auf eine Einrichtung zur Umwandlung der Bewegungsenergie des Flügelrades (5) in elektrische Energie überträgt, und einem über dem kuppelförmigen Gebäude (3) und dem Flügelrad (5) vorgesehenen, aus Säulen (18), (19) und (20), einer Dachkonstruktion (21) und Trägern (22) bestehenden Überbau, durch den der Wind in Richtung auf das Flügelrad (5) konzentriert, reguliert und gesteurt wird, das sich in einem Raum (10) befindet, der Teil des Überbaus ist, wobei die Träger (22), welche den Überbau in mehrere Sektoren unterteilen, am äusseren Umfang des Überbaus eine einzelne Mauer darstellen, die in Richtung auf das Zentrum des Überbaus zu zwei Mauern auseinanderläuft, welche sich vor dem im Zentrum des Überbaus angeordneten Flügelrad (5) wieder vereinigen, wodurch der zentrale Raum (10) definiert wird, in dem sich das Flügelrad (5) befindet, und wobei die vertikalen Wände (23) der Träger (22) derart unterschiedlich gekrümmt sind, dass sie den Wind auf die konkaven Flächen des Flügelrades (5) leiten und konzentrieren, dadurch gekennzeichnet, dass sich der Überbau auch um das kuppelförmige Gebäude erstreckt, dass die Öffnung zwischen der Oberfläche des kuppelförmigen Gebäudes (3), den einander gegenüberliegenden vertikalen Wänden (23) von zwei Trägern (22) und der Dachkonstruktion (21) am Eingang zu dem Raum (10), in dem sich das Flügelrad (5) befindet, durch in horizontaler Richtung bewegliche Schiebetore, die mechanisch oder hydraulisch betrieben werden und beim Öffnen in Schlitzen (28) innerhalb der Träger (22) verschwinden, verschliessbar sind und dass das Flügelrad (5) aus nur in einer Richtung gekrümmten, zerlegbaren Flügeln besteht, die über horizontale Platten (7) mit der Achse (6) verbunden sind.

2. Vorrichtung nach Anspruch 1, dadurch gekennzeichnet, dass der Überbau durch vier Träger (22) in vier Sektoren unterteilt wird.

### Claims

1. A system for the generation of electrical energy by utilizing and controlling wind energy, comprising a domed building (3) on which an impeller (5) is mounted whose axis (6) penetrates the domed building (3) at its highest point and transmits the motion of the impeller (5) to an installation for converting the kinetic energy of the impeller (5) into electrical energy and a superstructure consisting of pillars (18), (19) and (20), a roof construction (21) and supports (22) being arranged above the domed building (3) and the impeller (5), by means of which the wind is concentrated, regulated and controlled in the direction of the impeller (5) located in a chamber (10) which is part of the superstructure, wherein the supports (22) dividing the superstructure into several sectors at the outer circumference of the superstructure represent a single wall which towards the center of the superstructure divides into two walls which reunite in front of the impeller (5) located in the center of the superstructure, thus defining the central chamber (10) in which the impeller (5) is located, the vertical walls (23) of the supports (22) being differently curved so that they lead and concentrate the wind onto the concave surfaces of the impeller (5), characterized in that the superstructure also extends around the domed building, in that the apertures between the surface of the domed building (3), the opposing vertical walls (23) of two supports (22) and the roof construction (21) at the access to the chamber (10) in which the impeller (5) is located can be closed by sliding gates movable in the horizontal direction which are operated mechanically or hydraulically and, when opened, disappear into slots (28) situated in the supports (22), and in that the impeller (5) consists of dismountable vanes curved onyl in one direction which are connected with the axis (6) via horizontal plates (7).

2. A system according to claim 1, characterized in that the superstructure is divided into four sectors by four supports (22).

### Revendications

1. Système pour produire de l'énergie électrique en utilisant et en commandant l'énergie éolienne, comportant une construction (3) en forme de dôme sur laquelle est monté un rotor (5) dont l'axe (6) pénètre dans la construction (3) en forme de dôme au niveau du point le plus élevé de celle-ci et transmet le mouvement du rotor (5) à une installation qui transforme l'énergie cinétique du rotor (5) en énergie électrique, et une superstructure comprenant des piliers (18), (19) et (20), une structure de toit (21) et des supports (22), qui est prévue au-dessus de la construction (3) en forme de dôme et au-dessus du rotor (5) et qui concentre, régule et commande le vent en direction du rotor (5) qui est logé dans une chambre (10) faisant partie de la superstructure, où les supports (22) qui subdivisent la superstructure en plusieurs secteurs constituent au niveau de la circonférence de la superstructure une paroi unique qui se subdivise ert direction du centre de la superstructure pour former deux parois qui se rejoignent devant le rotor (5) situé au centre de la superstructure, définissant ainsi la chambre centrale (10) dans laquelle se trouve le rotor (5), les parois verticales (23) des supports (22) étant incurvées différemment de manière à guider et concentrer le vent sur les surfaces concaves du rotor (5), caractérisé en ce que la superstructure s'étend aussi autour de la construction (3) en forme de dôme, en ce que les ouvertures entre la surface de la construction (3) en forme de dôme, les parois verticales opposées (23) de deux supports (22) et la structure de toit (21) au niveau de l'accès à la chambre (10) dans laquelle se trouve le rotor (5), peuvent être fermées par des portes coulissantes qui peuvent se déplacer dans la direction horizontale et qui sont commandées mécaniquement ou hydrauliquement et qui disparaissent dans des fentes (28) se trouvant dans les supports (22), lorsqu'elles sont ouvertes, et en ce que le rotor (5) comprend des ailettes démontables incurvées seulement dans une direction, qui sont couplées à l'axe (6) par l'intermédiaire de plaques horizontales (7).

2. Système suivant la revendication 1, caractérisé en ce que la superstructure est subdivisée en quatre secteurs par quatre supports (22).

Fig. 1

Fig. 2

Fig. 3

Fig. 4

Fig. 5